# EUROPÄISCHE PATENTSCHRIFT

(11) **EP 2 113 328 B1**
(45) Veröffentlichungstag und Bekanntmachung des Hinweises auf die Patenterteilung: **09.02.2011**
(21) Anmeldenummer: 08020292.2
(22) Anmeldetag: 21.11.2008
(51) Int. Cl.: B23D 57/00, B28D 1/08, B28D 1/12

(54) **Handseilsäge**
Manual wire saw
Scie à câble manuelle

(30) Priorität: 28.04.2008 DE 102008021142
(43) Veröffentlichungstag der Anmeldung: 04.11.2009
(73) Patentinhaber: Brehm, Bernhard, 75365 Calw-Stammheim (DE)
(72) Erfinder: Brehm, Bernhard, 75365 Calw-Stammheim (DE)
(74) Vertreter: Ludewig, Rita

(56) Entgegenhaltungen:
- WO-A-2005/070598
- DE-A1- 19 739 523
- DE-A1-102005 021 284

## Beschreibung

Die Erfindung betrifft eine Handseilsäge zum zerschneiden von Naturstein, Beton, Stahlbeton und ähnlichen Baustoffen. Eine Handseilsäge gemäß dem Oberbegriff von Anspruch 1 ist aus der WO 2005/070598 und der DE 102005021284 bekannt.

Es sind Handsägen bekannt, die mit einem Sägeblatt arbeiten. Das Problem der Nutzung von Sägeblättern besteht darin, daß die erreichbare Schnittiefe vom Radius des Sägeblattes abhängig ist. Bei erforderlichen großen Schnittiefen, benötigt man Sägeblätter mit großem Durchmesser. Das macht die Säge nicht nur schwer und unhandlich. Mit Sägeblättern können außerdem keine rechten Winkel gesägt werden, was zu zeitaufwendigen Nacharbeiten und zu erheblichem Materialverlust führt. Gleiches trifft auch bei sogenannten Ringsägen zu.

Es sind auch Handsägen bekannt, die mit einer Kette arbeiten. Die DE 100 50 732 sieht eine Kettensäge zum schneiden von Beton vor, bei der ein Antriebskopf ein Kettenrad antreibt, ein mit dem Kettenrad ausgerichtetes Schwert am Antriebskopf befestigt ist und eine umlaufende Sägekette um das Schwert und das Kettenrad gezogen wird, um vom Kettenrad schnell auf einem Umlaufweg angetrieben zu werden. Von der Sägekette vorstehende Zähne fressen sich in das zu schneidende Material ein, wobei das im Sägeschlitz anfallende Material abgetragen und zerkleinert wird und die Zähne einen Schlitz in das Material schneiden. Beim Schnitt von Baumaterialien wie beispielsweise Beton entsteht durch das zerkleinerte Material in Verbindung mit dem Kühlwasser der Kettensäge eine schlammige Substanz, die sich in den Kettengliedern festsetzt, frißt und die Kette sehr schnell verschleißen läßt. Die Folge ist ein häufiges Auswechseln der Kette, die nicht nur teuer ist, sondern auch zu häufiger Wartung und zum Ausfall der Handsägen führt.

Die US 6,178,960 B1 offenbart eine Handseilsäge, aufweisend ein Antriebsrad mit einer Führungsnut für das Sägeseil, ein Führungsschwert, an dessen Spitze eine Aufnahme für ein Seilfuhrungszahnrad mit Zwischenräumen und Transportflächen, die am äußeren Umfang des Seilführungszahnrads angeformt sind. Dabei ist das Seilführangszahnrad an dem Führungsschwert mit Hilfe einer drehbaren Welle, Halterungen und Ringen drehbar gelagert. Das Sägeseil umläuft endlos das Antriebsrad, das Führungsschwert und das Seilfubrungszahnrad. Beim Umlaufen des Sägeseils über das Seilfuhrungszahnrad sollen die Schnittelemente des Sägeseils in die Zwischenräume des Seilführungszahnrads einrasten und die Zwischenräume des Sägeseils zwischen den Schnittelementen sollen sich um die Transportflächen des Seifühmngszahnrads legen, wobei die Schnittelemente des Sägeseils die Zwischenräume überragen und das zu schneidende Material abtragen sollen. Eine zweite Variante der Handseilsäge sieht ein verkürztes Führungsschwert mit einem Seilsführungszahnrad vor, das einen großen Durchmesser aufweise, so die Größe eines Sägeblatts erhält und als Kreissäge verwendbar sein soll.

Die Grundkonstruktion der Handseilsäge bewahrt das Sägeseil nicht vor dem Herausspringen aus dem Seilfühnmgszahnrad. Bei Druckausübung auf das Sägeseil gibt das Schwert nach, wodurch die Schnittelemente des Sägeseils auch auf den Führungsflächen des Seilführungszahnrads lagern können und das Sägeseil von dem Seilführungszahnrad herausspringen kann, weil die Seilsäge keine Seilspannung vorsieht.

Es war deshalb Aufgabe der Erfindung eine Handseilsäge zu schaffen, die eine kompakte Bauform und ein, gegenüber dem Stand der Technik, optimiertes Gewicht aufweist, die eine hohe Lebensdauer des Sägeseils, eine optimale Wartungsquote und eine kostengünstige Herstellung sowie eine erhebliche Reduzierung von Arbeitsunfällen gewährleistet.

Die Aufgabe wird mit den Merkmalen des Anspruchs 1 gelöst, indem die Handseilsäge an einem Trägerteil einen Grundkörper und einem Schlitten, zwei, unterhalb des Antriebsrads angeordnete, Umlenkrollen, einen Schwertkörper mit zwei äußeren Lagen und jeweils einer konkaven Kontur sowie zwei gabelförmigen Enden und einer mittleren Lage mit einem runden Durchbruch, eine Schnittrolle und eine Feder zwischen dem Schlitten und dem Schwertkörper aufweist.

Von besonderem Vorteil ist es, daß an dem Grundkörper des Trägerteils die Umlenkrollen und der Schlitten angeordnet sind, am Schlitten der Elektromotor und das Antriebsrad angeordnet und am Grundkörper beweglich geführt ist und der Schlitten durch die Feder zwischen dem Schlitten und dem Schwertkörper entgegen der Umlenkrollen vorgespannt ist, wobei während des Schneidvorgangs, bei Druck auf das Sägeseil, die Schnittrolle und den Schwertkörper, mit Hilfe der Umlenkrollen und des vorgespannten Schlittens das Sägeseil kontinuierlich zu spannen und um seine Achse drehbar ist.

Hervorzuheben ist die Schnittrolle, die in dem runden Durchbruch der mittleren Lage des Schwertkörpers mit Wälzkörpern drehbar gelagert ist, wobei das Sägeseil durch die gabelförmigen Enden an den Übergangsstellen zwischen Schwertkörper und Schnittrolle am Umfang der Schnittrolle kontinuierlich zu fixieren und zu halten ist.

Während des Schneidvorgangs wird außerdem, durch Druck auf das Sägeseil, die Schnittrolle und den Schwertkörper, das Sägeseil mit Hilfe der beiden beweglichen Umlenkrollen, der, durch die Feder vorgespannten, Antriebsrolle und des Schwertkörpers kontinuierlich gespannt und um seine Achse gedreht, um einen gleichmäßigen Verschleiß der Schnittelemente am Sägeseil zu gewährleisten und das Herunterspringen des Sägeseils von der Schnittrolle zu vermeiden, wodurch insbesondere Arbeitsausfälle mit schwerwiegenden gesundheitlichen Folgen für die Benutzer und die daraus entstehenden Folgekosten vermeidbar sind.

Vorteilhaft ist des weiteren die material- und gewichtsreduzierende konstruktive Ausgestaltung des erfindungsgemäßen Trägerteils, nach Anspruch 2, nach der das Trägerteil, mit einem Grundkörper, eingeformten Ausnehmungen und Griffelementen, zwei stirnseitig offenen Kanälen und einem Schlitten ausgestattet ist, die eine Aufnahme aller, für die Funktion wesentlichen, Baugruppen unterstützen sowie eine kompakte und leichtgewichtige Bauform der Handseilsäge ermöglicht. Das schließt selbstverständlich eine Gehäuseabdeckung bei Bedarf nicht aus.

Von funktionswesentlicher Bedeutung sind die Umlenkrollen, gemäß Anspruch 3, die wälzgelagert und unterhalb des Antriebsrads an dem Grundkörper des Trägerteils angeordnet sind, wobei die, zwischen dem Schlitten und dem Schwertkörper angeordnete, Feder eine Vorspannung zwischen dem Antriebsrad und den Umlenkrollen sowie dem Schwertkörper erzeugt und wobei im Betriebszustand der Handseilsäge bei beliebiger Druckrichtung auf das Sägeseil, die Schnittrolle und den Schwertkörper, die Spannung des Sägeseils kontinuierlich aufrecht zu erhalten ist. Durch dieses konstruktive Merkmal werden die Umlenkrollen als Seilspannung genutzt. Das Sägeseil bleibt während des gesamten Schneidvorgangs unter Spannung und kann auch nicht von der Schnittrolle springen.

Besonders vorteilhaft ist die erfindungsgemäße Gestaltung des Schwertkörpers, nach Anspruch 4, der zwei äußere Lagen mit jeweils einer konkaven Kontur mit zwei angeformten gabelförmigen Enden und eine mittlere Lage mit einem eingeformten runden Durchbruch an ihrer Spitze aufweist, die drei Lagen des Schwertkörpers kraftschlüssig miteinander verbunden sind und in ihrer Fläche Durchbrüche aufweisen. Die Ausführung des Schwertkörpers dient zur sicheren Führung und Fixierung des Sägeseils und zur Lagerung der Schnittrolle am Schwertkörper. Die Durchbrüche in der Fläche des Schwertkörpers unterstützen darüber hinaus die Optimierung des Gewichts der Handseilsäge.

Hervorzuheben ist auch die erfindungsgemäße Schnittrolle, nach Anspruch 5, Sie ist in besonders vorteilhafter Weise aus zwei Ringscheiben gebildet, die an ihrem äußeren Umfang jeweils eine abgerundete Schräge aufweisen und über den Durchbruch in der mittleren Lage des Schwertkörpers lösbar miteinander verbunden sind, mit ihrer äußeren Ringfläche in die konkave Kontur der äußeren Lagen hineinragen, mit diesen eine Ebene bilden und die gemeinsam eine Stärke aufweisen, die kleiner als der Durchmesser des Sägeseils ist. Mit der erfindungsgemäßen Schnittrolle ist keine Achslagerung am Schwertkörper erforderlich und das Gewicht der Handseilsäge wird weiter reduziert. Außerdem kann die Schnittrolle durch ihre zweiteilige Ausführung leicht ausgewechselt werden und schont den Schwertkörper. Durch die minimale Stärke der Schnittrolle wird außerdem eine kontinuierliche Drehung der Schnittelemente am Sägeseil um deren eigene Achse und damit deren gleichmäßiger Verschleiß gewährleistet. Die Nutzung von Sägeseilen hat eine weitere, insbesondere kostengünstige Wirkung.

Vorteilhaft für die Handhabung und zur Gewährleistung einer kompakten Bauweise sind, nach Anspruch 6, die, gegenüberliegend von einem Elektroantrieb, im Randbereich des Trägerteils angeordneten Gasdruckfedern, die zusammen mit zwei Hülsen zum Schutz vor dem Sägeseil je nach Druckrichtung auf die Schnittrolle entgegen der Schnittrichtung einzeln oder zusammen aus dem Trägerteil ausfahrbar und bei nachlassendem Druck wieder einfahrbar sind und die zusammen mit den Hülsen als Schutzmechanismus für den Benutzer der Handseilsäge dienen.

Schließlich gewährleistet die Führung des Sägeseils, nach Anspruch 7, von dem, mit dem Elektroantrieb verbundenen, Antriebsrad auf die erste, unterhalb des Antriebsrads, angeordnete Umlenkrolle, in die erste Hülse entlang der ersten Kante des Schwertkörpers über die Schnittrolle in die zweite Hülse entlang der gegenüberliegenden zweiten Kante des Schwertkörpers auf die zweite, unterhalb des Antriebsrads angeordnete Umlenkrollen wieder zum Antriebsrad eine endlose Führung des Sägeseils und dessen kontinuierliche Spannung und vermeidet das Herunterspringen des Sägeseils von der Schnittrolle.

Die Erfindung soll nachstehend anhand eines Ausführungsbeispiels beschrieben werden. Dabei zeigen die Zeichnungen in
- Fig. 1: eine Seitenansicht des Trägerteils mit Grundkörper, angeformten Handgriffen und Schlitten, Elektroantrieb, angedeuteten Umlenkrollen und Antriebsrad, Schwertkörper, Schnittrolle, einer Hülse und Sägeseil,
- Fig.2: eine Vorderansicht des mit der Schnittrolle bestückten Schwertkörper,
- Fig.3: einen Schnitt A-A, durch Fig.2
- Fig.4: eine Seitenansicht auf die Führung des Sägeseils über Antriebsrad, Umlenkrollen und Schnittrolle,
- Fig.5: eine rückwärtige Seitenansicht von Fig.1, mit ausgefahrenen Hülsen mit Gasdruckfedern

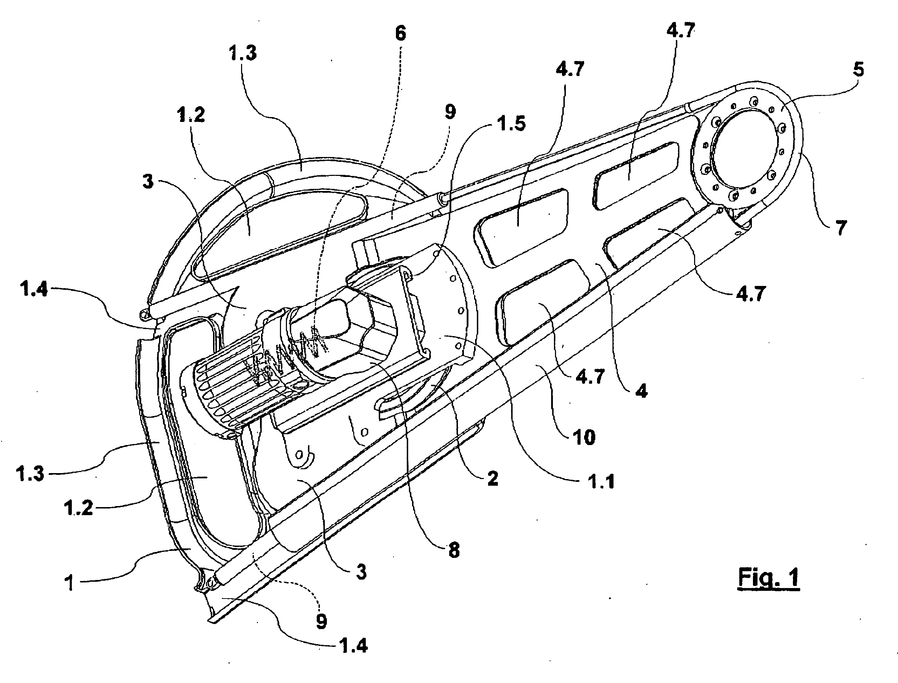

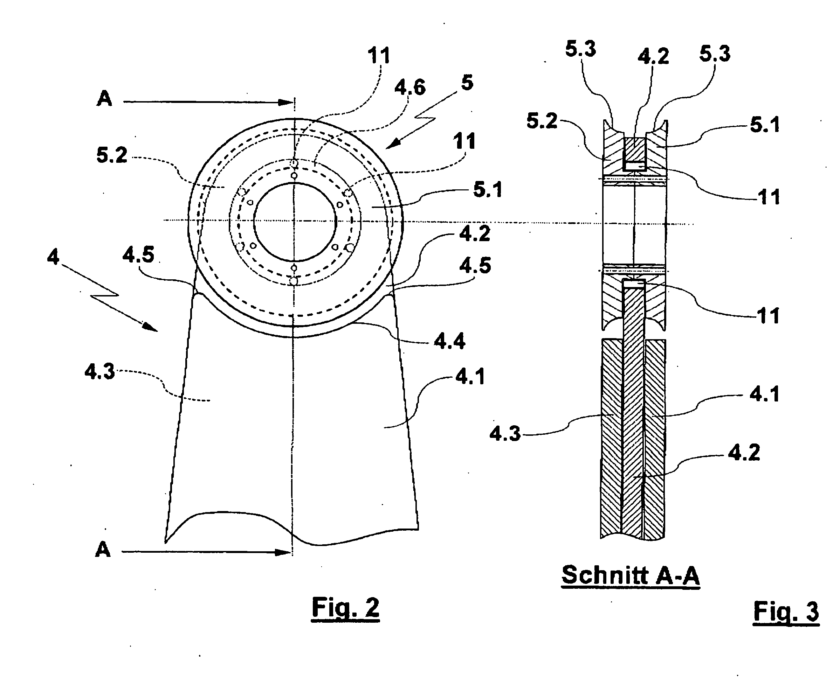

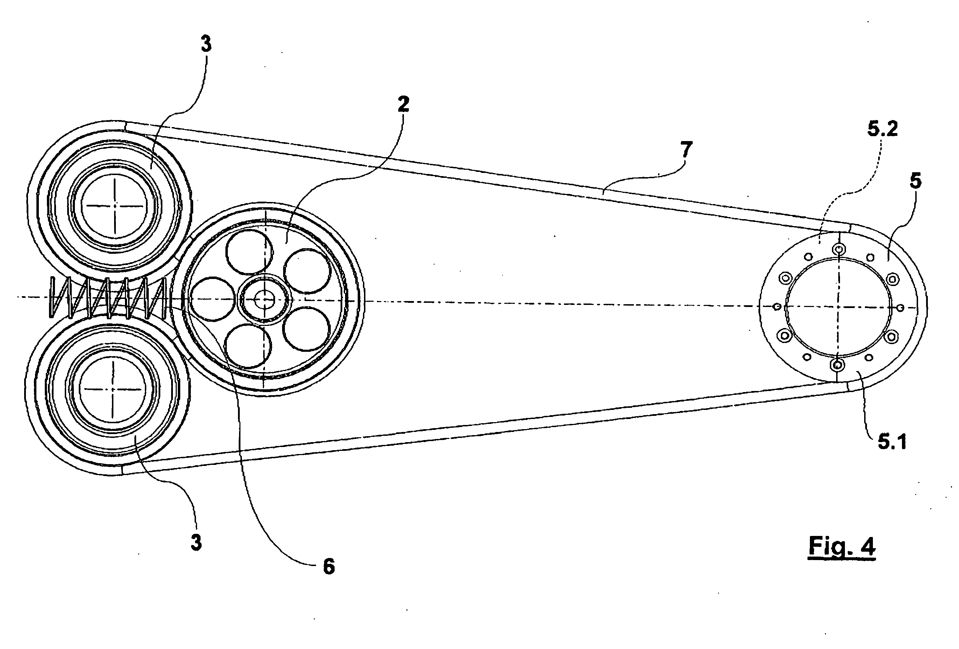

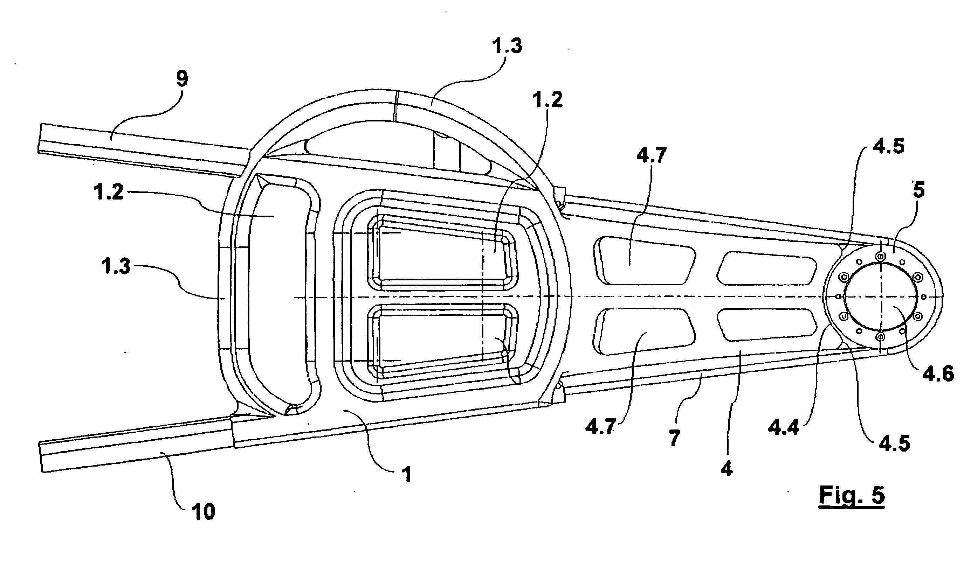

Fig. 1 zeigt die Seitenansicht einer prinzipiellen Darstellung der erfindungsgemäßen Handseilsäge. Ein Trägerteil 1 mit einem Grundkörper 1.1, eingeformten Ausnehmungen 1.2, Griffelementen 1.3, zwei stirnseitig offenen Kanälen 1.4 und einem Schlitten 1.5 dient zur Aufnahme aller Baugruppen der erfindungsgemäßen Handseilsäge. Auf dem Grundkörper 1.1 ist der Schlitten 1.5 beweglich gelagert und darauf ein Elektroantrieb 7 mit einem Antriebsrad 2 angeordnet. Unterhalb des Antriebsrads 2 sind zwei, nicht näher dargestellte. Umlenkrollen 3 am Grundkörper 1.1 angeordnet. Die Feder 6 ist vorzugsweise eine Druckfeder, und ist, in der Zeichnung nicht näher dargestellt, zwischen dem Schlitten 1.5 und dem Schwertkörper 4 angeordnet, wodurch der Schwerkörper 4 mit der Schnittrolle 5 und das Antriebsrad 2 gegen die Umlenkrollen 3 vorspannt sind. Die Feder 6 gewährleistet auf diese Weise eine kontinuierliche Spannung des Sägeseils 7. Gegenüberliegend ist am Trägerteil 1 je eine Gasdruckfeder 9 und eine Hülse 10 zum Schutz vor dem Sägeseil 7 angeordnet, die in den Kanälen 1.4 des Grundkörpers 1.1 geführt werden, wobei die Hülsen 10 bis zum Ende des Schwertkörpers 4 verlaufen. Oberhalb des Grundkörpers 1.1 ist der Schwertkörpers 4 befestigt. Der Schwertkörper 4 ist vorzugsweise aus Stahlblech gefertigt und besteht, wie in Fig.2 und Fig.3 näher dargestellt, aus einer ersten äußeren Lage 4.1 und einer zweiten äußeren Lage 4.3, die jeweils an einem Ende eine konkave Kontur 4.4 mit zwei gabelförmigen Enden 4.5 aufweisen und einer mittlere Lage 4.2, die von den beiden äußeren Lagen 4.1 und 4.3 eingeschlossen ist und die zwischen den äußeren Lagen 4.1 und 4.3 herausragt. Der zwischen den beiden Lagen 4.1 und 4.3 herausragende Teil der mittleren Lage 4.2 des Schwertkörpers 4 ist an seiner Spitze mit einem eingeformten Durchbruch 4.6 versehen. Die Lagen 4.1 bis 4.3 sind kraftschlüssig miteinander verbunden und, zur weiteren Gewichtsoptimierung, in den Flächen mit durchgehenden Durchbrüchen 4.7 ausgestattet. Am äußeren Ende des Schwertkörpers 4 ist in dem Durchbruch 4.6 der mittleren Lage 4.2 eine Schnittrolle 5 mit Wälzkörpern 11 drehbar gelagert. Die Schnittrolle 5 besteht aus zwei Ringscheiben 5.1 und 5.2, die an ihrem äußeren Umfang mit einer abgerundeten Schräge 5.3 versehen und über den Durchbruch 4.6 des Schwerkörpers 4 lösbar miteinander verbunden sind. Die Ringscheiben 5.1 und 5.2 sind miteinander so verbunden, daß ihre abgerundeten Schrägen 5.3 der Schnittrolle 5 eine konkave Umfangsfläche bilden. Mit ihrer äußeren Ringfläche ragen die Ringscheiben 5.1 und 5.2 jeweils in die konkaven Kontur 4.4 der äußeren Lagen 4.1 und 4.3 des Schwertkörpers 4 hinein, wodurch die äußeren Ringflächen 5.1 und 5.2 mit den Flächen der äußeren Lagen 4.1 und 4.3 des Schwertkörpers 4 eine Ebene bilden. Die Schnittrolle 5 ist im montierten Zustand in einer Stärke ausgeführt, die dünner ist, als der größte Durchmesser des Sägeseils 7. Das Sägeseil 7 weist vorzugsweise einen Durchmesser von 6mm auf. Die Schnittrolle 5 ist aus diesem Grund nicht stärker als vorzugsweise 4mm. Nach Fig.4 ist das Sägeseil 7 vom Antriebsrad 2 über die erste Umlenkrolle 3 entlang der ersten Kante des Schwertkörpers 4 über die Schnittrolle 5 entlang der gegenüberliegenden zweiten Kante des Schwertkörpers 4 über die zweite Umlenkrollen 3 zurück auf das Antriebsrad 2 endlos geführt. Fig.5 zeigt wie beim Schnittvorgang Druck auf das Sägeseil 7, die Schnittrolle 5 und den Schwertkörper 4 ausgeübt wird und je nach Druckrichtung die Gasdruckfedern 9 mit den Hülsen 10 in die stirnseitig offenen Kanäle 1.4 des Trägerteils 1 einzeln oder gemeinsam eingeschoben und endseitig aus dem jeweiligen Kanal 1.4 herausgefahren werden. Bei nachlassendem Druck werden die Hülsen 10 mit den Gasdruckfedern 9 wieder eingefahren und in ihre alte Position zurückgeführt.

### Aufstellung der verwendeten Bezugszeichen

- 1: Trägerteil,
- 1.1: Grundkörper,
- 1.2: Ausnehmungen,
- 1.3: Griffelemente,
- 1.4: stirnseitig offen Kanäle,
- 1.5: Schlitten,
- 2: Antriebsrad,
- 3: Umlenkrolle,
- 4: Schwertkörper,
- 4.1: erste äußere Lage des Schwertkörpers,
- 4.2: mittlere Lage des Schwertkörpers
- 4.3: zweite äußere Lage des Schwerkörpers,
- 4.4: konkave Kontur,
- 4.5: gabelförmige Enden der konkaven Kontur,
- 4.6: Durchbruch,
- 4.7: Durchbrüche in der Fläche des Schwertkörpers,
- 5: Schnittrolle,
- 5.1: erste Ringscheibe,
- 5.2: zweite Ringscheibe,
- 5.3: abgerundete Schrägen,
- 6: Feder,
- 7: Sägeseil,
- 8: Elektroantrieb,
- 9: Gasdruckfeder,
- 10: Hülse
- 11: Wälzkörper

## Patentansprüche

1. Handseilsäge zum zerschneiden von Naturstein, Beton, Stahlbeton und ähnlichen Baustoffen, aufweisend ein Gehäuse mit Handgriffen, einen Elektroantrieb, ein Antriebsrad, einen Schwertkörper und ein Sägeseil, **dadurch gekennzeichnet,**
**daß** die Handseilsäge an einem Trägerteil (1) mit einem Grundkörper (1.1) und einem Schlitten (1.5), zwei, unterhalb des Antriebsrads (2) angeordnete, Umlenkrollen (3), einen Schwertkörper (4) mit zwei äußeren Lagen (4.1, 4.3) und jeweils einer konkaven Kontur (4.4) sowie zwei gabelförmigen Enden (4.5) und einer mittleren Lage (4.2) mit einem runden Durchbruch, (4.6), eine Schnittrolle (5) und eine Feder (6) zwischen dem Schlitten (1.5) und dem Schwertkörper (4) aufweist,
**daß** an dem Grundkörper (1.1) die Umlenkrollen (3) und der Schlitten (1.5) angeordnet sind, am Schlitten (1.5) der Elektromotor (8) und das Antriebsrad (2) angeordnet und am Grundkörper (1.1) beweglich geführt ist und der Schlitten (1.5) durch die Feder (6) zwischen dem Schlitten (1.5) und dem Schwertkörper (4) entgegen der Umlenkrollen (3) vorgespannt ist, wobei während des Schneidvorgangs, bei Druck auf das Sägeseil (7), die Schnittrolle (5) und den Schwertkörper (4), mit Hilfe der Umlenkrollen (3) und des vorgespannten Schlittens (1.5) das Sägeseil (7) kontinuierlich zu spannen und um seine Achse drehbar ist und
**daß** die Schnittrolle (5) in dem runden Durchbruch (4.6) der mittleren Lage (4.2) des Schwertkörpers (4) mit Wälzkörpern (11) drehbar gelagert ist, wobei das Sägeseil (7) durch die gabelförmigen Enden (4.5) an den Übergangsstellen zwischen Schwertkörper (4) und Schnittrolle (5) am Umfang der Schnittrolle (5) kontinuierlich zu fixieren und zu halten ist.

2. Handseilsäge nach Anspruch 1, **dadurch gekennzeichnet, daß** das Trägerteil (1) mit einem Grundkörper (1.1), eingeformten Ausnehmungen (1.2), Griffelementen (1.3), zwei stirnseitig offenen Kanälen (1.4), und einem Schlitten (1.5), zur Aufnahme aller für die Funktion wesentlichen Baugruppen, ausgestattet ist.

3. Handseilsäge nach Anspruch 1, **dadurch gekennzeichnet, daß** die Umlenkrollen (3) wälzgelagert und unterhalb des Antriebsrads (2) an dem Grundkörper (1.1) des Trägerteils (1) angeordnet sind und die, zwischen dem Schlitten (1.5) und dem Schwertkörper (4) angeordnete, Feder (6) eine Vorspannung zwischen dem Antriebsrad (2) und den Umlenkrollen (3) sowie dem Schwertkörper (4) erzeugt, wobei im Betriebszustand der Handseilsäge, bei beliebiger Druckrichtung auf das Sägeseil (7), die Schnittrolle (5) und den Schwcrtkörper (4), die Spannung des Sägeseils (7) kontinuierlich aufrecht zu erhalten ist.

4. Handseilsäge nach Anspruch 1, **dadurch gekennzeichnet, daß** der Schwertkörper (4) zwei äußere Lagen (4.1, 4.3) mit jeweils einer konkaven Kontur (4.4) mit zwei angeformten gabelförmigen Enden (4.5) und eine mittlere Lage (4.2) mit einem eingeformten runden Durchbruch (4.6) an ihrer Spitze, aufweist, wobei die mittlere Lage (4.2) zwischen den Lagen (4.1, 4.3) herausragt, die drei Lagen (4.1, 4.2, 4.3) des Schwertkörpers (4) kraftschlüssig miteinander verbunden sind und in ihrer Fläche Durchbrüche (4.7) aufweisen.

5. Handseilsäge nach Anspruch 1, **dadurch gekennzeichnet, daß** die Schnittrolle (5) aus zwei Ringscheiben (5.1, 5.2) gebildet ist, die an ihrem äußeren Umfang jeweils eine abgerundete Schräge (5.3) aufweisen und über den Durchbruch (4.6) der mittleren Lage (4.2) des Schwertkörpers (4) lösbar miteinander verbunden sind, mit ihrer äußeren Ringfläche in die konkave Kontur (4.4) der äußeren Lagen (4.1, 4.3) hinein ragen, mit den Lagen (41, 4.3) eine Ebene bilden und die gemeinsam eine Stärke aufweisen, die kleiner als der Durchmesser des Sägeseils (7) ist.

6. Handseilsäge nach Anspruch 1, **dadurch gekennzeichnet, daß** gegenüberliegend von dem Elektroantrieb (8) im Randbereich des Trägerteils (1) jeweils eine Gasdruckfeder (9) angeordnet ist, die zusammen mit zwei Hülsen (10) zum Schutz vor dem Sägeseil (7) je nach Druckrichtung auf die Schnittrolle (5) entgegen der Schnittrichtung einzeln oder zusammen aus dem Trägerteil (1) ausfahrbar und bei nachlassendem Druck wieder einfahrbar sind.

7. Handseilsäge nach Anspruch 1, **dadurch gekennzeichnet, daß** das Sägeseil (7) von dem, mit dem Elektroantrieb (8) verbundenen, Antriebsrad (2) auf die erste, unterhalb des Antriebsrads (2) angeordnete, Umlenkrolle (3), in die erste Hülse (10) entlang der ersten Kante des Schwertkörpers (4) über die Schnittrolle (5) in die zweite Hülse (10) entlang der gegenüberliegenden zweiten Kante des Schwertkörpers (4) auf die zweite, unterhalb des Antriebsrads (2) angeordnete, Umlenkrolle (3) wieder zum Antriebsrad (2) endlos geführt ist.

## Claims

1. Manual wire saw for cutting natural stone, concrete, reinforced concrete and similar building materials, featuring a housing with hand grips, an electric drive, a drive gear, a swivel blade body and a saw cable, **characterised in**
**that** the manual wire saw features a support structure (1) with a base body (1.1) and a carriage (1.5), two guide rolls (3) located beneath the drive gear (2), a swivel blade body (4) with two outer positions (4.1, 4.3) and a concave contour (4.4) in each case, as well as two forked ends (4.5) and a middle position (4.2) with a round aperture (4.6), a section roll (5) and a spring (6) between the carriage (1.5) and the swivel blade body (4),
**that** the guide rolls (3) and the carriage (1.5) are arranged on the base body (1.1), the electric motor (8) and the drive gear (2) are arranged on the carriage (1.5), and movably guided on the base body (1.1), and the carriage (1.5) is pre-stressed against the guide rolls (3) by the spring (6) between the carriage (1.5) and the swivel blade body (4), whereby during the cutting process, the saw cable (7) is to be continually clamped, rotatable around its axis, via pressure on the saw cable (7), the section roll (5) and the swivel blade body (4), with the help of the guide rolls (3) and the pre-stressed carriage (1.5)
**that** the section roll (5) is pivotally mounted in the round aperture (4.6) of the middle position (4.2) of the swivel blade body (4) with rolling bodies (11), whereby the saw cable (7) is to be continually fixed and held in place at the transition points between the swivel blade body (4) and section roll (5) at the circumference of the section roll (5) by forked ends (4.5).

2. Manual wire saw according to claim 1, **characterised in that** the support structure (1) is equipped with a base body (1.1), moulded openings (1.2), grip elements (1.3), two frontally open channels (1.4), and a carriage (1.5) to accommodate all of the components essential for functioning.

3. Manual wire saw according to claim 1, **characterised in that** the guide rolls (3) are mounted on rolling bearings and are arranged on the base body (1.1) of the support structure (1) beneath the drive gear (2), and the spring (6) located between the carriage (1.5) and the swivel blade body (4) generates pre-stress between the drive gear (2) and the guide rolls (3) and the swivel blade body (4), whereby during operation of the manual wire saw, the stress of the saw cable (7) is to be continually maintained by the user-defined pressure direction on the saw cable (7), the section roll (5) and the swivel blade body (4).

4. Manual wire saw according to claim 1, **characterised in that** the swivel blade body (4) features two outer positions (4.1, 4.3), with a concave contour (4.4) in each case, with two integral forked ends (4.5) and a middle position (4.2) with a moulded round aperture (4.6) at its point, whereby the middle position (4.2) extends between the outer positions (4.1, 4.3), and all three positions (4.1, 4.2, 4.3) of the swivel blade body (4) are connected together in a force-fit manner, and feature apertures (4.7) in their surface.

5. Manual wire saw according to claim 1, **characterised in that** the section roll (5) is composed of two annular discs (5.1, 5.2), each featuring a rounded bevel (5.3) on its outer circumference, and which are detachably connected together via the aperture (4.6) of the middle position (4.2) of the swivel blade body (4), whereby their outer ring surfaces protrude into the concave contour (4.4) of the outer positions (4.1, 4.3), forming a plane with the positions (4.1, 4.3), and which together form a thickness that is smaller than the diameter of the saw cable (7).

6. Manual wire saw according to claim 1, **characterised in that** a gas pressure spring (9) is arranged in each case opposite the electric drive (8) in the border area of the support structure (1), and these springs, together with two casings (10) for protection from the saw cable (7), can be extended from the support structure (1) individually or jointly in accordance with the pressure direction on the section roll (5) against the cutting direction, and can be retracted again when the pressure is released.

7. Manual wire saw according to claim 1, **characterised in that** the saw cable (7) is conducted endlessly from the drive gear (2) connected with the electric drive (8), to the first guide roll (3) located beneath the drive gear (2), into the first casing (10) along the first edge of the swivel blade body (4), over the section roll (5) into the second casing (10) along the opposite, second edge of the swivel blade body (4), to the second guide roll (3) located beneath the drive gear (2), and finally back to the drive gear (2).

## Revendications

1. Scie à câble manuelle destinée à couper des pierres naturelles, du béton, du béton armé et des matériaux de construction semblables, comprenant un carter pourvu de poignées, un mécanisme d'entraînement électrique, une roue motrice, un corps ensiforme et un câble de sciage, **caractérisée par le fait**
**que** ladite scie à câble manuelle comprend, sur une partie support (1) avec un corps de base (1.1) et un chariot (1.5), deux poulies de renvoi (3) disposées au-dessous de ladite roue motrice (2), un corps ensiforme (4) ayant deux couches extérieures (4.1, 4.3) et respectivement un contour concave (4.4) ainsi que deux extrémités en fourche (4.5) et une couche intermédiaire (4.2) avec une percée ronde (4.6), une poulie de coupe (5) et un ressort (6) situé entre ledit chariot (1.5) et le corps ensiforme (4),
**que** les poulies de renvoi (3) et ledit chariot (1.5) sont disposés sur ledit corps de base (1.1), le moteur électrique (8) et ladite roue motrice (2) sont disposés sur ledit chariot (1.5) et guidés de manière mobile sur ledit corps de base (1.1) et que le chariot (1.5) est précontraint contre les poulies de renvoi (3) par le ressort (6) agencé entre le chariot (1.5) et le corps ensiforme (4) ; durant l'opération de coupe, lorsqu'une pression est exercée sur ledit câble de sciage (7), sur la poulie de coupe (5) et sur le corps ensiforme (4), ledit câble de sciage (7) étant tendu de façon continue à l'aide des poulies de renvoi (3) et du chariot (1.5) précontraint et pouvant tourner autour de son axe, et
**que** ladite poulie de coupe (5) est logée à rotation au moyen de corps de roulement (11) dans ladite percée ronde (4.6) de la couche intermédiaire (4.2) du corps ensiforme (4), ledit câble de sciage (7) étant fixé et maintenu de manière continue sur la circonférence de la poulie de coupe (5) grâce aux extrémités en fourche (4.5) sur les zones de transition entre le corps ensiforme (4) et la poulie de coupe (5).

2. Scie à câble manuelle selon la revendication 1, **caractérisée par le fait que** ladite partie support (1) est équipée d'un corps de base (1.1), d'évidements (1.2) y formés, d'éléments de préhension (1.3), de deux canaux (1.4) qui sont ouverts sur la face frontale et d'un chariot (1.5) pour recevoir tous les ensembles essentiels pour le fonctionnement.

3. Scie à câble manuelle selon la revendication 1, **caractérisée par le fait que** les poulies de renvoi (3) sont logées par roulements et disposées au-dessous de la roue motrice (2) sur le corps de base (1.1) de ladite partie support (1) et que ledit ressort (6) agencé entre le chariot (1.5) et le corps ensiforme (4) provoque une précontrainte entre la roue motrice (2) et les poulies de renvoi (3) et le corps ensiforme (4) ; en état de fonctionnement de la scie à câble manuelle, dans n'importe quelle direction de pression sur le câble de sciage (7), sur la poulie de coupe (5) et sur le corps ensiforme (4), la tension du câble de sciage (7) étant maintenue de façon continue.

4. Scie à câble manuelle selon la revendication 1, **caractérisée par le fait que** ledit corps ensiforme (4) présente deux couches extérieures (4.1, 4.3) avec chacune un contour concave (4.4) avec deux extrémités en fourche (4.5) y formées, ainsi qu'une couche intermédiaire (4.2) ayant une percée ronde (4.6) formée dans celle-ci sur sa pointe, ladite couche intermédiaire (4.2) étant en saillie entre les couches (4.1, 4.3), les trois couches (4.1, 4.2, 4.3) du corps ensiforme (4) étant assemblées par force et présentant des percées (4.7) dans leur surface.

5. Scie à câble manuelle selon la revendication 1, **caractérisée par le fait que** ladite poulie de coupe (5) est constituée par deux disques annulaires (5.1, 5.2) qui présentent chacun, sur leur circonférence extérieure, un biais arrondi (5.3) et sont reliés entre eux de manière amovible par la percée (4.6) de la couche intermédiaire (4.2) du corps ensiforme (4), se projettent, avec leur surface annulaire extérieure, dans ledit contour concave (4.4) des couches extérieures (4.1, 4.3), forment un plan avec lesdites couches (4.1, 4.3) et qui présentent ensemble une épaisseur qui est inférieure au diamètre du câble de sciage (7).

6. Scie à câble manuelle selon la revendication 1, **caractérisée par le fait qu'**un ressort à gaz (9) est disposé respectivement en face dudit entraînement électrique (8) dans la zone marginale de la partie support (1), qui, conjointement avec deux manchons (10) de protection contre le câble de sciage (7), selon la direction de pression sur la poulie de coupe (5), peu(ven)t être sorti(s) de ladite partie support (1) soit individuellement soit ensemble et être rentré(s) dans celle-ci lorsque la pression est relâchée.

7. Scie à câble manuelle selon la revendication 1, **caractérisée par le fait que** ledit câble de sciage (7) passe sans fin depuis la roue motrice (2) reliée à l'entraînement électrique (8), sur la première poulie de renvoi (3) située au-dessous de la roue motrice (2), dans le premier manchon (10) suivant la première arête du corps ensiforme (4), via la poulie de coupe (5) dans le second manchon (10) suivant la deuxième arête opposée du corps ensiforme (4), sur la deuxième poulie de renvoi (3) disposée au-dessous de la roue motrice (2) et atteint à nouveau ladite roue motrice (2).
